# EUROPEAN PATENT APPLICATION

(11) **EP 2 432 238 A2**
(43) Date of publication of application: **21.03.2012**
(21) Application number: 11007190.9
(22) Date of filing: 05.09.2011
(51) Int. Cl.: H04N 13/04, H04N 13/02

(54) **Mobile terminal and method for controlling operation of the mobile terminal**

(30) Priority: 20.09.2010 KR 20100092611
(71) Applicant: LG ELECTRONICS INC., Yeongdeungpo-gu Seoul 150-721 (KR)
(72) Inventor: Kim, Jonghwan, Seoul 153-023 (KR)
(74) Representative: TER MEER - STEINMEISTER & PARTNER GbR

(57) **Abstract**

A mobile terminal and a method for controlling the operation of the same are provided In the method, upon selection of 3D content to be reproduced, a 3D viewing section and a 2D viewing section of the 3D content are determined according to a preset viewing condition. The selected 3D content is displayed as a stereoscopic 3D image on a display module in the 3D viewing section and is displayed as a 2D image on the display module in the 2D viewing section. This reduces user fatigue that may be caused when viewing a stereoscopic 3D image for a long time.

## Description

### CROSS-REFERENCE TO RELATED APPLICATION

This application claims the priority benefit of Korean Patent Application No. 10-2010-0092611, filed on September 20, 2010 in the Korean Intellectual Property Office, the disclosure of which is incorporated herein by reference.

### BACKGROUND OF THE INVENTION

### 1. Field of the invention

The present invention relates to a mobile terminal and a method for controlling the operation of the mobile terminal, and more particularly to a mobile terminal and a method for controlling the operation of the mobile terminal, wherein it is possible to reduce user fatigue when viewing a stereoscopic 3D image.

### 2. Description of the Related Art

Mobile terminals are portable devices, which can provide users with various services such as a voice calling service, a video calling service, an information input/output service, and a data storage service.

As the types of services provided by mobile terminals diversify, an increasing number of mobile terminals have been equipped with various complicated functions such as capturing photos or moving pictures, playing music files or moving image files, providing game programs, receiving broadcast programs and providing wireless internet services and have thus evolved into multimedia players.

Various novel attempts have been made in terms of hardware or software to provide more complex functionality to the mobile terminal implemented as such a multimedia player. One example is a user interface environment that enables the user to easily and conveniently search for and select a function.

A technology in which a number of images captured through cameras are combined through image processing to generate a stereoscopic 3D image has also been used recently. When this technology is applied to a mobile terminal, it is possible to generate a stereoscopic 3D image using cameras provided on the mobile terminal and to display a stereoscopic 3D image on a display module of the mobile terminal.

However, since a stereoscopic 3D image basically utilizes the disparity between a left-eye image and a right-eye image, sharp changes in disparity or lengthy viewing of stereoscopic 3D images may cause user eye fatigue, resulting in dizziness, headache, and the like.

Thus, there is a need to provide a method for reducing user fatigue caused by lengthy viewing, sharp disparity change, or the like when viewing a stereoscopic 3D image using a mobile terminal.

### SUMMARY OF THE INVENTION

The present invention provides a mobile terminal and a method for controlling the operation of the mobile terminal, wherein it is possible to reduce user fatigue when viewing a stereoscopic 3D image by adjusting a viewing time or disparity change of a stereoscopic 3D image within an appropriate range.

According to an aspect of the present invention, there is provided a method for controlling operation of a mobile terminal, the method including selecting 3D content to be reproduced, determining a 3D viewing section and a 2D viewing section of the 3D content according to a preset viewing condition, and displaying the 3D content as a stereoscopic 3D image on a display module in the 3D viewing section and displaying the 3D content as a 2D image on the display module in the 2D viewing section.

According to another aspect of the present invention, there is provided a method for controlling operation of a mobile terminal, the method including selecting 3D content to be reproduced, displaying the 3D content as a stereoscopic 3D image on a display module, displaying the 3D content as the stereoscopic 3D image after adjusting change of a 3D effect of the stereoscopic 3D image to be equal to or less than a first reference level when the change of the 3D effect of the stereoscopic 3D image exceeds the first reference level.

According to another aspect of the present invention, there is provided a mobile terminal including a display module configured to be able to display a stereoscopic 3D image and a 2D image, and a controller configured to determine, when 3D content to be reproduced is selected, a 3D viewing section and a 2D viewing section of the 3D content according to a preset viewing condition and to display the 3D content as a stereoscopic 3D image on the display module in the 3D viewing section and displaying the 3D content as a 2D image on the display module in the 2D viewing section.

According to another aspect of the present invention, there is provided a mobile terminal including a display module configured to be able to display a stereoscopic 3D image and a 2D image, and a controller configured to reproduce and display selected 3D content on the display module and display the 3D content as the stereoscopic 3D image after adjusting change of a 3D effect of the stereoscopic 3D image to be equal to or less than a first reference level when the change of the 3D effect of the stereoscopic 3D image exceeds the first reference level.

### BRIEF DESCRIPTION OF THE DRAWINGS

The above and other objects, features and other advantages of the present invention will be more clearly understood from the following detailed description taken in conjunction with the accompanying drawings, in which:
FIG. 1 illustrates a block diagram of a mobile terminal according to an embodiment of the present invention;
FIG. 2 illustrates a front perspective view of the mobile terminal according to the embodiment of the present invention;
FIG. 3 illustrates a rear perspective view of the mobile terminal shown in FIG. 2;
FIG. 4 illustrates a relationship between fatigue and the depth of a 3D object in a stereoscopic 3D image;
FIG. 5 schematically illustrates a method for controlling the operation of a mobile terminal according to an embodiment of the present invention;
FIG. 6 is a flow chart illustrating a method for controlling the operation of a mobile terminal according to an embodiment of the present invention;
FIG. 7 is a flow chart illustrating a method for controlling the operation of a mobile terminal according to another embodiment of the present invention;
FIGS. 8 to 10 illustrate exemplary screens for setting a viewing condition according to an embodiment of the present invention; and
FIGS. 11 to 13 illustrate exemplary screens illustrating a method for controlling the operation of a mobile terminal according to another embodiment of the present invention.

### DETAILED DESCRIPTION OF THE PREFERRED EMBODIMENTS

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

The term 'mobile terminal', as used herein, may indicate a mobile phone, a smart phone, a laptop computer, a digital broadcast receiver, a personal digital assistant (PDA), a portable multimedia player (PMP), a navigation device, a tablet computer, an electronic-book (e-book) reader, and the like. In this disclosure, the terms 'module' and 'unit' can be used interchangeably.

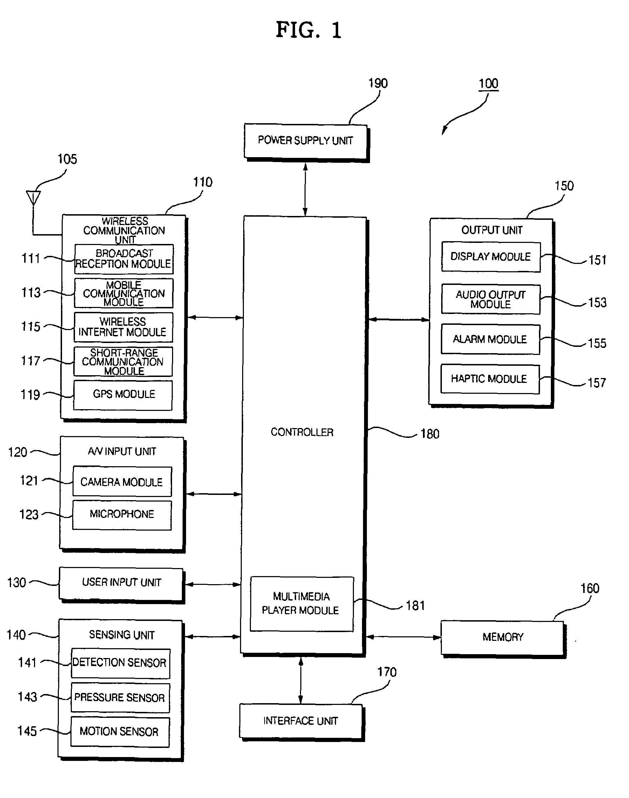

FIG. 1 illustrates a block diagram of a mobile terminal 100 according to an embodiment of the present invention. Referring to FIG. 1, the mobile terminal 100 may include a wireless communication unit 110, an audio/video (A/V) input unit 120, a user input unit 130, a sensing unit 140, an output unit 150, a memory 160, an interface unit 170, a controller 180, and a power supply unit 190. Here, when the above constituent elements are implemented, two or more of the constituent elements may be combined into one constituent element, or one constituent element may be divided into two or more constituent elements, if appropriate.

The wireless communication unit 110 may include a broadcast reception module 111, a mobile communication module 113, a wireless internet module 115, a short-range communication module 117, and a global positioning system (GPS) module 119.

The broadcast reception module 111 may receive broadcast signals and/or broadcast-related information from an external broadcast management server through a broadcast channel. The broadcast channel may be a satellite channel or a terrestrial channel. The broadcast management server may be a server which generates broadcast signals and/or broadcast-related information and transmits the generated broadcast signals and/or the generated broadcast-related information or may be a server which receives and then transmits previously-generated broadcast signals and/or previously-generated broadcast-related information.

The broadcast-related information may include broadcast channel information, broadcast program information and/or broadcast service provider information. The broadcast signals may include a TV broadcast signal, a radio broadcast signal, a data broadcast signal, the combination of a data broadcast signal and a TV broadcast signal or the combination of a data broadcast signal and a radio broadcast signal. The broadcast-related information may be provided to the mobile terminal 100 through a mobile communication network. In this case, the broadcast-related information may be received by the mobile communication module 113, rather than by the broadcast reception module 111. The broadcast-related information may come in various forms. For example, the broadcast-related information may come in the form of digital multimedia broadcasting (DMB) electronic program guide (EPG) or digital video broadcasting handheld (DVB-H) electronic service guide (ESG).

The broadcast reception module 111 may receive broadcast signals using various broadcasting systems, such as DMB-terrestrial (DMB-T), DMB-satellite (DMB-S), media forward link only (MediaFLO), DVB-H, and integrated services digital broadcast-terrestrial (ISDB-T). In addition, the broadcast reception module 111 may be suitable not only for the above-mentioned digital broadcasting systems but also for nearly all types of broadcasting systems other than those set forth herein. The broadcast signal and/or the broadcast-related information received by the broadcast reception module 111 may be stored in the memory 160.

The mobile communication module 113 may transmit wireless signals to or receives wireless signals from at least one of a base station, an external terminal, and a server through a mobile communication network. The wireless signals may include various types of data according to whether the mobile terminal 100 transmits/receives voice call signals, video call signals, or text/multimedia messages.

The wireless internet module 115 may be a module for wirelessly accessing the internet. The wireless internet module 115 may be embedded in the mobile terminal 100 or may be installed in an external device. The wireless internet module 115 may be embedded in the mobile terminal 100 or may be installed in an external device. The wireless internet module 115 may use various wireless internet technologies such as wireless local area network (WLAN), Wireless Broadband (WiBro), World Interoperability for Microwave Access (Wimax), and High Speed Downlink Packet Access (HSDPA).

The short-range communication module 117 may be a module for short-range communication. The short-range communication module 117 may use various short-range communication techniques such as Bluetooth, radio frequency identification (RFID), infrared data association (IrDA), ultra wideband (UWB), and ZigBee.

The GPS module 119 may receive position information from a plurality of GPS satellites.

The A/V input unit 120 may be used to receive audio signals or video signals. The AN input unit 120 may include a camera module 121 and a microphone 123. The camera module 121 may process various image frames such as still images or moving images captured by an image sensor during a video call mode or an image capturing mode. The image frames processed by the camera module 121 may be displayed by a display module 151.

The image frames processed by the camera module 121 may be stored in the memory 160 or may be transmitted to an external device through the wireless communication unit 110. The mobile terminal 100 may include two or more cameras 121.

The microphone 123 may receive external audio signals during a call mode, a recording mode, or a voice recognition mode and may convert the received sound signals into electrical audio data. During the call mode, the mobile communication module 113 may convert the electrical sound data into data that can be readily transmitted to a mobile communication base station, and may then output the data obtained by the conversion. The microphone 123 may use various noise removal algorithms to remove noise that may be generated during the reception of external sound signals.

The user input unit 130 may generate key input data based on user input for controlling the operation of the mobile terminal 100. The user input unit 130 may be implemented as a keypad, a dome switch, or a static pressure or capacitive touch pad which is capable of receiving a command or information by being pushed or touched by a user. Alternatively, the user input unit 130 may be implemented as a wheel, a jog dial or wheel, or a joystick capable of receiving a command or information by being rotated. Still alternatively, the user input unit 130 may be implemented as a finger mouse. In particular, if the user input unit 130 is implemented as a touch pad and forms a mutual layer structure with the display module 151, the user input unit 130 and the display module 151 may be collectively referred to as a touch screen.

The sensing unit 140 may determine a current state of the mobile terminal 100 such as whether the mobile terminal 100 is opened or closed, the position of the mobile terminal 100 and whether the mobile terminal 100 is placed in contact with the user, and may generate a sensing signal for controlling the operation of the mobile terminal 100. For example, when the mobile terminal 100 is a slider-type mobile phone, the sensing unit 140 may determine whether the mobile terminal 100 is opened or closed. In addition, the sensing unit 140 may determine whether the mobile terminal 100 is powered by the power supply unit 190 and whether the interface unit 170 is connected to an external device.

The sensing unit 140 may include a detection sensor 141, a pressure sensor 143 and a motion sensor 145. The detection sensor 141 may detect an approaching object or whether there is an object nearby the mobile terminal 100 without mechanical contact. More specifically, the detection sensor 141 may detect an approaching object based on a change in an alternating current (AC) magnetic field or a static magnetic field, or the rate of change of capacitance. The sensing unit 140 may include two or more detection sensors 141.

The pressure sensor 143 may determine whether pressure is being applied to the mobile terminal 100 or may measure the magnitude of pressure, if any, applied to the mobile terminal 100. The pressure sensor 143 may be installed in a certain part of the mobile terminal 100 where the detection of pressure is necessary. For example, the pressure sensor 143 may be installed in the display module 151. In this case, it is possible to differentiate a typical touch input from a pressure touch input, which is generated by applying greater pressure than that used to generate a typical touch input, based on a signal output by the pressure sensor 143. In addition, it is possible to determine the magnitude of pressure applied to the display module 151 upon receiving a pressure touch input based on the signal output by the pressure sensor 143.

The motion sensor 145 may determine the location and motion of the mobile terminal 100 using an acceleration sensor or a gyro sensor.

Generally, acceleration sensors are a type of device for converting a vibration in acceleration into an electric signal. With recent developments in micro-electromechanical system (MEMS) technology, acceleration sensors have been widely used in various products for various purposes ranging from detecting large motions such as car collisions as performed in airbag systems for automobiles to detecting minute motions such as the motion of the hand as performed in gaming input devices. In general, two or more acceleration sensors representing different axial directions are incorporated into a single package. There are some cases when the detection of only one axial direction, for example, a Z-axis direction, is necessary. Thus, when an X- or Y-axis acceleration sensor, instead of a Z-axis acceleration sensor, is required, the X- or Y-axis acceleration sensor may be mounted on an additional substrate, and the additional substrate may be mounted on a main substrate.

Gyro sensors are sensors for measuring angular velocity, and may determine the relative direction of the rotation of the mobile terminal 100 to a reference direction.

The output unit 150 may output audio signals, video signals and alarm signals. The output unit 150 may include the display module 151, an audio output module 153, an alarm module 155, and a haptic module 157.

The display module 151 may display various information processed by the mobile terminal 100. For example, if the mobile terminal 100 is in a call mode, the display module 151 may display a user interface (UI) or a graphic user interface (GUI) for making or receiving a call. If the mobile terminal 100 is in a video call mode or an image capturing mode, the display module 151 may display a UI or a GUI for capturing or receiving images.

If the display module 151 and the user input unit 130 form a mutual layer structure and are thus implemented as a touch screen, the display module 151 may be used not only as an output device but also as an input device capable of receiving information by being touched by the user.

If the display module 151 is implemented as a touch screen, the display module 151 may also include a touch screen panel and a touch screen panel controller. The touch screen panel is a transparent panel attached onto the exterior of the mobile terminal 100 and may be connected to an internal bus of the mobile terminal 100. The touch screen panel keeps monitoring whether the touch screen panel is being touched by the user. Once a touch input to the touch screen panel is received, the touch screen panel transmits a number of signals corresponding to the touch input to the touch screen panel controller. The touch screen panel controller processes the signals transmitted by the touch screen panel, and transmits the processed signals to the controller 180. Then, the controller 180 determines whether a touch input has been generated and which part of the touch screen panel has been touched based on the processed signals transmitted by the touch screen panel controller.

The display module 151 may include electronic paper (e-paper). E-paper is a type of reflective display technology and can provide as high resolution as ordinary ink on paper, wide viewing angles, and excellent visual properties. E-paper can be implemented on various types of substrates such as a plastic, metallic or paper substrate and can display and maintain an image thereon even after power is cut off. In addition, e-paper can reduce the power consumption of the mobile terminal 100 because it does not require a backlight assembly. The display module 151 may be implemented as e-paper by using electrostatic-charged hemispherical twist balls, using electrophoretic deposition, or using microcapsules.

The display module 151 may include at least one of an LCD, a thin film transistor (TFT)-LCD, an organic light-emitting diode (OLED), a flexible display, and a three-dimensional (3D) display. The mobile terminal 100 may include two or more display modules 151. For example, the mobile terminal 100 may include an external display module (not shown) and an internal display module (not shown).

The audio output module 153 may output audio data received by the wireless communication unit 110 during a call reception mode, a call mode, a recording mode, a voice recognition mode, or a broadcast reception mode or may output audio data present in the memory 160. In addition, the audio output module 153 may output various sound signals associated with the functions of the mobile terminal 100 such as receiving a call or a message. The audio output module 153 may include a speaker and a buzzer.

The alarm module 155 may output an alarm signal indicating the occurrence of an event in the mobile terminal 100. Examples of the event include receiving a call signal, receiving a message, and receiving a key signal. Examples of the alarm signal output by the alarm module 155 include an audio signal, a video signal and a vibration signal. More specifically, the alarm module 155 may output an alarm signal upon receiving an incoming call or message. In addition, the alarm module 155 may receive a key signal and may output an alarm signal as feedback to the key signal. Therefore, the user may be able to easily recognize the occurrence of an event based on an alarm signal output by the alarm module 155. An alarm signal for notifying the user of the occurrence of an event may be output not only by the alarm module 155 but also by the display module 151 or the audio output module 153.

The haptic module 157 may provide various haptic effects (such as vibration) that can be perceived by the user. If the haptic module 157 generates vibration as a haptic effect, the intensity and the pattern of vibration generated by the haptic module 157 may be altered in various manners. The haptic module 157 may synthesize different vibration effects and may output the result of the synthesization. Alternatively, the haptic module 157 may sequentially output different vibration effects.

The haptic module 157 may provide various haptic effects, other than vibration, such as a haptic effect obtained using a pin array that moves perpendicularly to a contact skin surface, a haptic effect obtained by injecting or sucking in air through an injection hole or a suction hole, a haptic effect obtained by giving a stimulus to the surface of the skin, a haptic effect obtained through contact with an electrode, a haptic effect obtained using an electrostatic force, and a haptic effect obtained by realizing the sense of heat or cold using a device capable of absorbing heat or generating heat The haptic module 157 may be configured to enable the user to recognize a haptic effect using the kinesthetic sense of the fingers or the arms. The mobile terminal 100 may include two or more haptic modules 157.

The memory 160 may store various programs necessary for the operation of the controller 180. In addition, the memory 160 may temporarily store various data such as a list of contacts, messages, still images, or moving images.

The memory 160 may include at least one of a flash memory type storage medium, a hard disk type storage medium, a multimedia card micro type storage medium, a card type memory (e.g., a secure digital (SD) or extreme digital (XD) memory), a random access memory (RAM), and a read-only memory (ROM). The mobile terminal 100 may operate a web storage, which performs the functions of the memory 160 on the internet.

The interface unit 170 may interface with an external device that can be connected to the mobile terminal 100. The interface unit 170 may be a wired/wireless headset, an external battery charger, a wired/wireless data port, a card socket for, for example, a memory card, a subscriber identification module (SIM) card or a user identity module (UIM) card, an audio input/output

(I/O) terminal, a video I/O terminal, or an earphone. The interface unit 170 may receive data from an external device or may be powered by an external device. The interface unit 170 may transmit data provided by an external device to other components in the mobile terminal 100 or may transmit data provided by other components in the mobile terminal 100 to an external device.

When the mobile terminal 100 is connected to an external cradle, the interface unit 170 may provide a path for supplying power from the external cradle to the mobile terminal 100 or for transmitting various signals from the external cradle to the mobile terminal 100.

The controller 180 may control the general operation of the mobile terminal 100. For example, the controller 180 may perform various control operations regarding making/receiving a voice call, transmitting/receiving data, or making/receiving a video call. The controller 180 may include a multimedia player module 181, which plays multimedia data. The multimedia player module 181 may be implemented as a hardware device and may be installed in the controller 180. Alternatively, the multimedia player module 181 may be implemented as a software program.

The power supply unit 190 may be supplied with power by an external power source or an internal power source and may supply power to the other components in the mobile terminal 100.

The mobile terminal 100 may include a wired/wireless communication system or a satellite communication system and may thus be able to operate in a communication system capable of transmitting data in units of frames or packets.

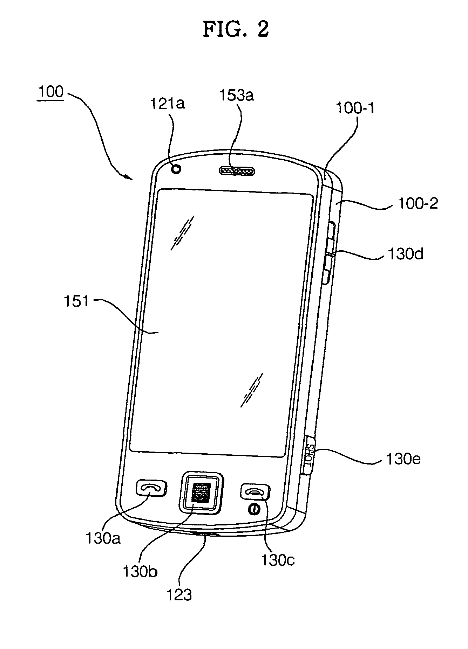

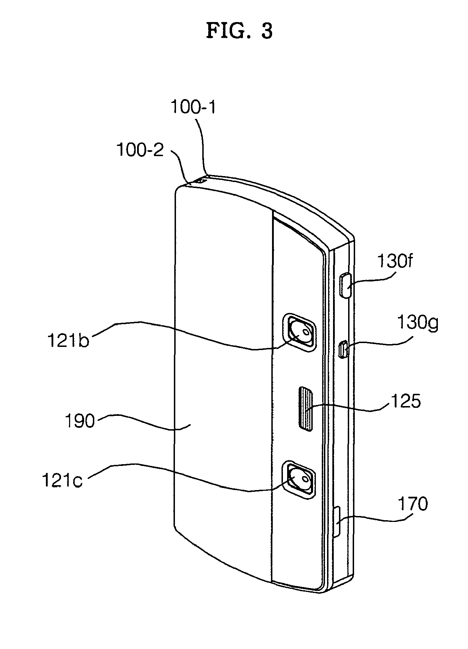

The exterior of the mobile terminal 100 will hereinafter be described in detail with reference to FIGS. 2 and 3. Various embodiments presented herein can be implemented using nearly any type of mobile terminal, such as a folder-type, a bar-type, a swing-type and a slider-type mobile terminal. However, for convenience, it is assumed that the mobile terminal 100 is a bar-type mobile terminal equipped with a touch screen.

FIG. 2 illustrates a front perspective view of the mobile terminal 100. Referring to FIG. 2, the exterior of the mobile terminal 100 may be formed by a front case 100-1 and a rear case 100-2. Various electronic devices may be installed in the space formed by the front case 100-1 and the rear case 100-2. The front case 100-1 and the rear case 100-2 may be formed of a synthetic resin through injection molding. Alternatively, the front case 100-1 and the rear case 100-2 may be formed of a metal such as stainless steel (STS) or titanium (Ti).

The display module 151, a first audio output module 153a, a first camera 121a, and first through third user input modules 130a through 130c may be disposed in the main body of the mobile terminal 100, and particularly, in the front case 100-1. Fourth and fifth user input modules 130d and 130e and the microphone 123 may be disposed on one side of the rear case 100-2.

If a touch pad is configured to overlap the display module 151 and thus to form a mutual layer structure, the display module 151 may serve as a touch screen. Thus, the user can enter various information simply by touching the display module 151.

The first audio output module 153a may be implemented as a receiver or a speaker. The first camera 121a may be configured to be suitable for capturing a still or moving image of the user. The microphone 123 may be configured to properly receive the user's voice or other sounds.

The first through fifth user input modules 130a through 130e and sixth and seventh user input modules 130f and 130g may be collectively referred to as the user input unit 130. The user input unit 130 may adopt various tactile manners as long as it can offer tactile feedback to the user.

For example, the user input unit 130 may be implemented as a dome switch or touch pad capable of receiving a command or information by being pushed or touched by the user; or a wheel, a jog dial or wheel, or a joystick capable of receiving a command or information by being rotated. More specifically, the first through third user input modules 130a through 130c may be used to make or receive a call, move a mouse pointer, scroll a display screen, and enter various commands such as 'start', 'end', and 'scroll' to the mobile terminal 100, the fourth user input module 130d may be used to select an operating mode for the mobile terminal 100, and the fifth user input module 130e may serve as a hot key for activating certain functions of the mobile terminal 100.

The first user input module 130a may allow the user to, the second user input module 130b may be used to enter various numerals, characters or symbols, and the third and fourth user input modules 130c and 130d may be used as hot keys for activating certain functions of the mobile terminal 100.

FIG. 3 illustrates a rear perspective view of the mobile terminal 100. Referring to FIG. 3, two cameras 121b and 121c may be disposed at the rear of the rear case 100-2. The sixth and seventh user input modules 130f and 130e and the interface unit 170 may be disposed on one side of the second body 100B.

Each of the two cameras 121b and 121c disposed at the rear side of the mobile terminal 100 may have a capture direction substantially opposite to that of the camera 121a disposed at the front side and may have a different resolution (i.e., a different number of pixels) from that of the camera 121a. The two cameras 121 b and 121c disposed at the rear side may be simultaneously used to generate a stereoscopic 3D image in a 3D capture mode for capturing stereoscopic 3D images and may also be independently used to generate a 2D image.

The two cameras 121b and 121c may be arranged at the rear side such that it is possible to adjust the interval between the two cameras 121b and 121c to adjust the size, resolution, or the like of a stereoscopic 3D image that can be generated through the two cameras 121b and 121c. One of the two cameras 121 b and 121 c may be movable in a horizontal direction so as to adjust the interval between the two cameras 121 b and 121c. In addition, one of the two cameras 121 b and 121c may be detachably mounted to the mobile terminal 100 such that the camera can be mounted to the mobile terminal 100 only when needed.

A flash 125 and a mirror (not shown) may be additionally provided at the rear side between the two cameras 121b and 121c. The flash 125 shines light toward a subject when the subject is captured using the two cameras 121b and 121c. The mirror allows the user to view their face or the like when capturing an image of themselves.

A second audio output module (not shown) may be additionally provided on the rear case 100-2. The second audio output module may implement a stereo function in conjunction with the first audio output module 153a and may be used to perform voice or video communication in a speakerphone mode.

The interface unit 170 may serve as a passage for exchanging data with an external device. An antenna for receiving broadcast signals (not shown) in addition to an antenna for communication may be provided on the front case 100-1 and the rear case 100-2 at portions thereof. Each antenna may be mounted to be retractable from the rear case 100-2.

A power supply unit 190 for supplying power to the mobile terminal 100 may be provided on the rear case 100-2. The power supply unit 190 is, for example, a rechargeable battery which is detachably mounted to the rear case 100-2 for the purpose of recharging or the like.

The mobile terminal 100 according to the present invention can generate a stereoscopic 3D image using the two cameras 121b and 121c provided at the rear side of the main body of the mobile terminal 100 and can display the stereoscopic 3D image on the display module 151.

The term "3D stereoscopic image" refers to an image which is perceived by the user when displayed on a monitor or screen such that each object present in the image appears to have the same depth and realism as any normal object in real space. A stereoscopic 3D image provides different 2D images to each eye. The two 2D images are then transmitted to the brain via the retina. The brain then combines the two images so as to give depth and realism. Stereoscopic sensation is produced by binocular disparity due to the distance of about 65mm between human eyes. Binocular disparity is the most important factor required for all stereoscopic displays to produce 3D imaginary.

Methods for displaying a stereoscopic 3D image include a stereoscopic method utilizing glasses, an auto-stereoscopic method that does not require the use of glasses, and a projection method utilizing holographic technology. The stereoscopic method is widely used for household TVs and auto-stereoscopy is generally used for mobile terminals.

Methods that do not require the use of glasses include a lenticular method, a parallax barrier method, and a parallax illumination method. In the lenticular method, a semi-cylindrical lenticular sheet corresponding to the interval between left-eye and right-eye images is attached to the front of an element on which the left-eye and right-eye images are displayed such that the left-eye image is viewed only by the left eye and the right-eye image is viewed only by the right eye, thereby providing a stereoscopic sensation. In the parallax barrier method, left-eye and right-eye images are displayed below a parallax barrier such that different images are viewed by the left and right eyes, thereby providing a stereoscopic sensation. In the parallax illumination method, an illumination line is provided at the rear side of an LCD configured such that different LCD lines of illuminated light are provided to the left and right eyes, thereby providing a stereoscopic effect. In addition, studies have been conducted on methods for implementing 3D display based on other factors providing stereoscopic perception to human.

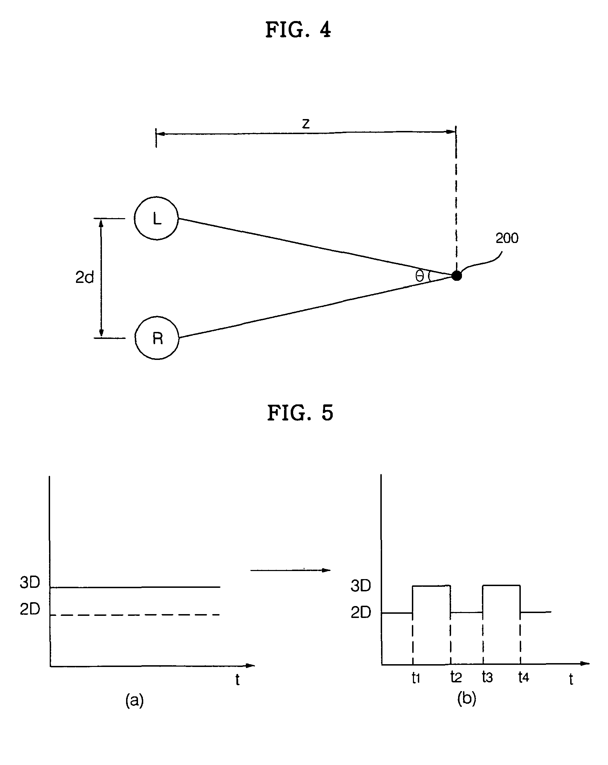

FIG. 4 illustrates a relationship between fatigue and the depth of a 3D object in a stereoscopic 3D image. The depth of an object in a stereoscopic 3D image varies depending on the respective positions of the object in a left-eye image and a right-eye image.

Referring to FIG. 4, according to medical research, it is known that, given a distance 2d between the eyes and a distance z between the eyes and a 3D object 200 viewed in an image plane where the eyes are located, the eyes feel tired when viewing the 3D object 200 if the angle θ between the sightlines exceeds about 1.5 degrees.

That is, when focusing on a 3D object located near the eyes, the eyes get more tired as the value of θ increases and, when seeing a 3D object distant from the eyes, the eyes get less tired as the value of θ decreases. Thus, to reduce user fatigue, a 3D object needs to be arranged in a stereoscopic 3D image such that the value of θ is within an appropriate range.

FIG. 5 schematically illustrates a method for controlling the operation of a mobile terminal according to the present invention.

FIG. 5(a) illustrates a general method for reproducing 3D content in which a stereoscopic 3D image is continuously displayed for a certain time. If a stereoscopic 3D image is continuously displayed in this manner, user fatigue increases as viewing time increases.

FIG. 5(b) illustrates a method for reproducing 3D content according to an embodiment of the present invention in which 3D viewing sections and 2D viewing sections are set to alternately display a stereoscopic 3D image and a 2D image. Specifically, sections between t1 and t2 and between t3 and t4 are set as 3D viewing sections to display selected 3D content as a stereoscopic 3D image and sections between 0 and t1 and between t2 and t3 are set as 2D viewing sections to display selected 3D content as a 2D image.

By alternately displaying the same 3D content as a 2D image and a stereoscopic 3D image in this manner, it is possible to reduce user fatigue compared to when a stereoscopic 3D image is continuously displayed. The 2D viewing sections and the 3D viewing sections may be determined depending on various viewing criteria that will be described later.

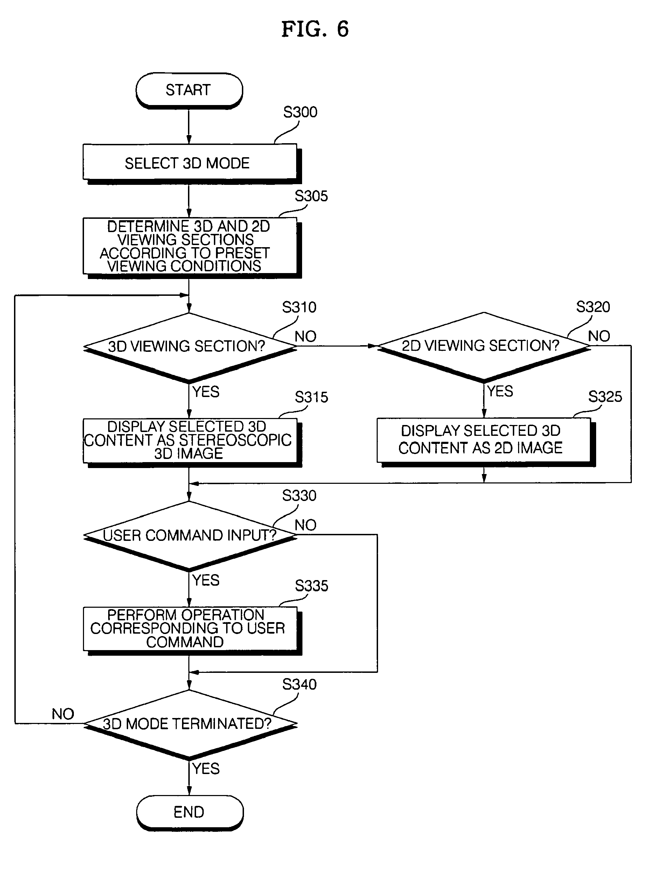

FIG. 6 is a flow chart illustrating a method for controlling the operation of a mobile terminal according to an embodiment of the present invention.

As shown in FIG. 6, when a 3D mode for reproducing selected 3D content is selected according to a user command or the like (S300), the controller 180 determines 3D viewing sections and 2D viewing sections according to a preset viewing condition(s) for the selected 3D content (S305).

Here, a viewing condition used to determine the 3D viewing sections and the 2D viewing sections may be determined according to viewing time information, user information, age information, 3D effect information of 3D content, recommendation information of a 3D content provider, or the like. The viewing condition may also be set according to a user command.

The viewing sections may also be determined based on a frame having a predetermined depth level or more when 3D content is reproduced. That is, when 3D content is reproduced, only frames, whose depth levels are equal to or higher than the predetermined depth level, may be displayed as a stereoscopic 3D image or a predetermined number of frames adjacent to each frame having the predetermined depth level may be displayed as a stereoscopic 3D image. Here, the predetermined depth level, the predetermined number, and the like may be set by the user.

After the 3D viewing sections and the 2D viewing sections are determined, the controller 180 determines whether or not the current viewing section is a 3D viewing section (S310) and displays the 3D content as a stereoscopic 3D image on the display module 151 if the current viewing section is a 3D viewing section (S315). The controller 180 then determines whether or not the current viewing section is a 2D viewing section (S320) and displays the 3D content as a 2D image on the display module 151 if the current viewing section is a 2D viewing section (S325).

For example, the 3D content may be displayed as a stereoscopic 3D image for 20 minutes and then be displayed as a 2D image for the next 20 minutes or may alternatively be displayed as a stereoscopic 3D image in a section(s) recommended by the content provider while being displayed as a 2D image in other sections.

To alternately display a 2D image and a stereoscopic 3D image in the above manner, the display module 151 needs to be configured such that the display configuration (or display mode) of the display module 151 can be switched from a 2D display mode to a stereoscopic 3D display mode or switched from a stereoscopic 3D display mode to a 2D display mode. Such display mode switching may require a process for adjusting brightness of the display module 151 since the brightness of the display module 151 when a 2D image is displayed may differ from the brightness when a stereoscopic 3D image is displayed.

In addition, when a playback-related user command such as pause, fast forward, back, or playback position change is input while 3D content is being reproduced (S330), the controller 180 performs an operation corresponding to the input user command (S335). When a stereoscopic 3D image is reproduced, the controller 180 may display a gauge representing 3D effect information and may control the 3D effect of a stereoscopic 3D image according to an input made through the gauge.

The above procedure is repeated until the 3D mode is terminated (S340). By alternately displaying a stereoscopic 3D image and a 2D image according to a viewing condition as described above, it is possible to reduce user fatigue that may be caused when viewing a stereoscopic 3D image for a long time.

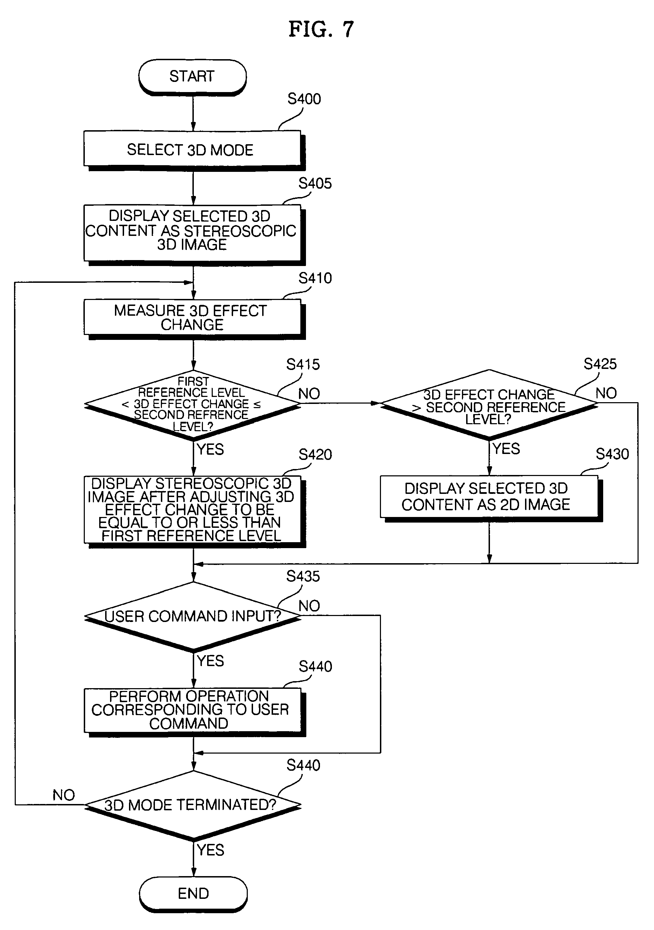

FIG. 7 is a flow chart illustrating a method for controlling the operation of a mobile terminal according to another embodiment of the present invention.

As shown in FIG. 7, when a 3D mode for displaying stereoscopic 3D images is selected according to a user command or the like (S400), the controller 180 displays a stereoscopic 3D image for selected 3D content on the display module 151 (S405).

The controller 180 measures changes in the 3D effect of the stereoscopic 3D image while displaying the stereoscopic 3D image on the display module 151 (S410).

For example, the change in the 3D effect of the stereoscopic 3D image may be calculated through the following procedure. First, depth information of a specific object may be calculated according to the difference between the respective coordinates of the object in a left-eye image and a right-eye image that represent the stereoscopic 3D image using disparity. More specifically, the angle θ between sightlines from the eyes to the object increases as the difference of the coordinates of the object increases and decreases as the difference decreases.

Thus, depth information of each frame may be calculated by performing the above procedure for calculating the depth information of the object on the entire left-eye or right-eye image and obtaining the average or standard deviation thereof.

The change of the 3D effect may then be calculated by comparing the calculated depth information of the current frame with depth information of a previous or next frame. The calculated change of the 3D effect or depth information may be indicated by a numerical value and may also be indicated by a graph, a specific image, or the like. Depending on an environment in which the mobile terminal is used, the change of the 3D effect may be calculated with reference to an object which has undergone the greatest change in the depth information without comparing depth information of each frame.

In addition, the 3D effect information, the 3D effect change information, or the like may be calculated by the content provider and then may be stored and provided in a specific region of the 3D content.

When the 3D effect change is greater than a first reference level and less than or equal to a second reference level (S415), the controller 180 displays the stereoscopic 3D image after adjusting the 3D effect change of the stereoscopic 3D image to be less than or equal to the first reference level (S420). Here, the controller 180 may adjust the 3D effect change by moving the respective positions of the object in the left-eye image and the right-eye image such that the angle θ between the sightlines is within an appropriate range. In addition, the controller 180 may adjust the 3D effect change by inserting frames, arranged such that the position of the object gradually changes over the frames, between frames over which the 3D effect greatly changes.

On the other hand, when the 3D effect change exceeds the second reference level (S425), the controller 180 displays the selected 3D content as a 2D image on the display module 151 (S430). The second reference level may be set as a 3D effect change level which is higher than that of the first reference level and may also be set as a duration for which a 3D effect change exceeding a predetermined level persists, which is longer than that of the first reference level. That is, the 3D content is displayed as a 2D image when the change of the 3D effect is very sharp, which increases fatigue and makes it difficult to perceive the 3D effect The first and second reference levels may be set by the user.

In addition, when a playback-related user command such as pause, fast forward, back, or playback position change is input while 3D content is being reproduced (S435), the controller 180 performs an operation corresponding to the input user command (S440).

The above procedure is repeated until the 3D mode is terminated (S445). By displaying 3D content as a 2D image or adjusting the change of the 3D effect of a stereoscopic 3D image below a predetermined reference level as described above, it is possible to reduce user fatigue that may be caused when the 3D effect sharply changes.

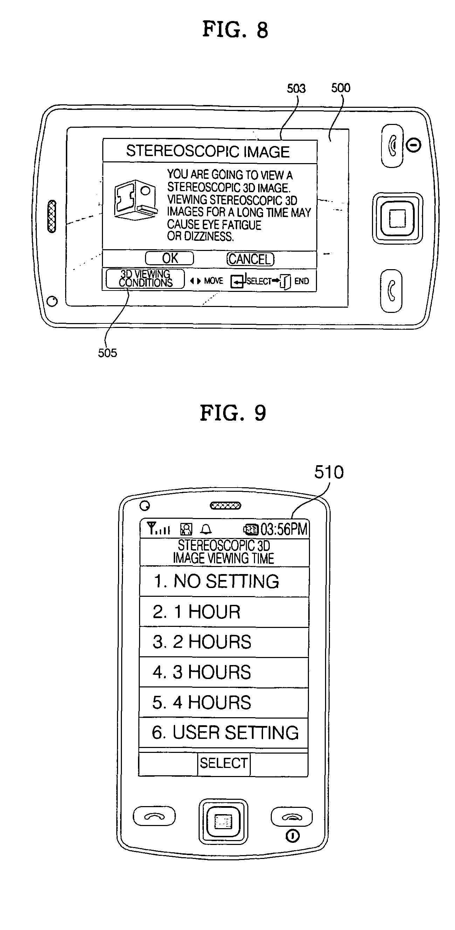

FIGS. 8 to 10 illustrate exemplary menu screens for setting a viewing condition(s). First, FIG. 8 illustrates an exemplary menu screen displayed when viewing condition setting is selected.

A guide message 503 warning about viewing stereoscopic 3D images for a long time may be displayed on the menu screen 500 that is displayed upon selection of viewing condition setting. A 3D viewing condition item 505 on the menu screen 500 may be selected to set a viewing condition for stereoscopic 3D image viewing.

Upon selection of the 3D viewing condition item 505 on the menu screen 500, a screen 510 that enables the user to set a stereoscopic 3D image viewing time may be displayed as shown in FIG. 9. Once a viewing time is set on the screen 510, a stereoscopic 3D image may be displayed for the set time and a 2D image may be displayed or stereoscopic 3D image display may be terminated when the 3D viewing time has exceeded the set time.

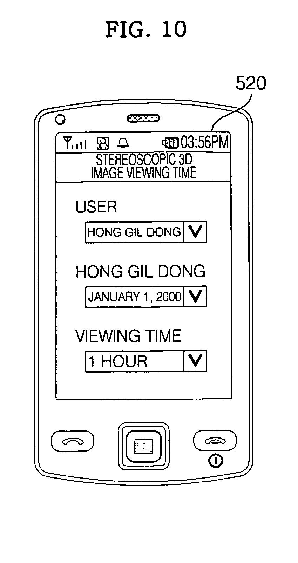

In addition, a screen 520 that enables individual setting of a viewing condition for each user, each age, or each viewing time may be displayed as shown in FIG. 10. In this case, a stereoscopic 3D image viewing time or an allowable degree of change of 3D effect may be determined based on criteria applied to each set user or age.

Once the viewing condition(s) is set, 2D viewing sections and 3D viewing sections may be determined with reference to the set viewing condition when specific 3D content is reproduced according to the set viewing condition.

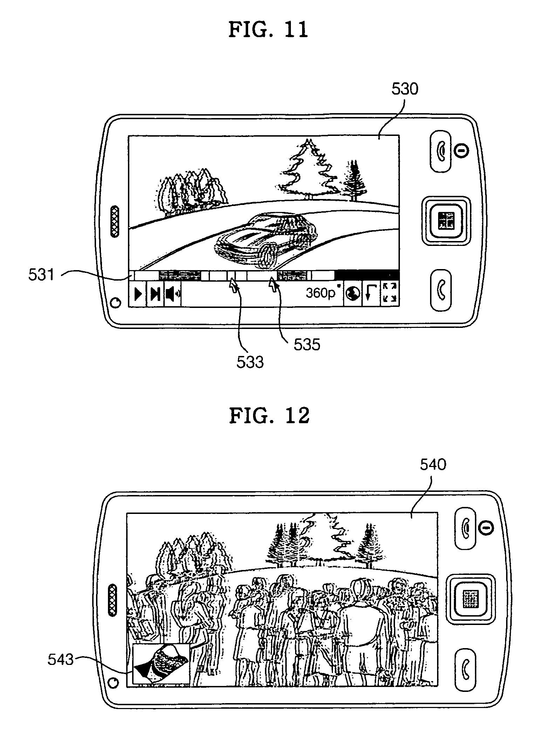

FIG. 11 illustrates an example in which display of 3D content is switched from 2D image display to stereoscopic 3D image display at specific times or in specific sections.

As shown in FIG. 11, a stereoscopic 3D image may be displayed only in playback sections 533 and 535 selected on a progress bar 531 and a 2D image may be displayed in remaining playback sections. 3D effect information of each section may be indicated or recommended or highlight sections may be indicated by color or the like on the progress bar 531. With reference to such information, the user may control stereoscopic 3D image display such that the stereoscopic 3D image is displayed only at specific times or in specific sections. FIG. 12 illustrates an exemplary screen on which a stereoscopic 3D image is displayed.

As shown in FIG. 12, 3D effect information 543 of the stereoscopic 3D image may be displayed as a 3D image indicating depth information measured for each frame on a region of the screen 540 on which the stereoscopic 3D image is displayed. The 3D effect information 543 of the stereoscopic 3D image may be displayed as a 3D figure in this manner. In addition, stereoscopic 3D image display may be switched to 2D image display in response to a user input such as touching of the screen 540 on which the stereoscopic 3D image is displayed.

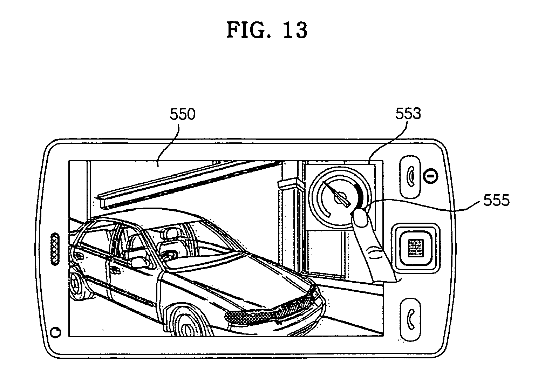

FIG. 13 illustrates another exemplary screen on which a stereoscopic 3D image is displayed. As shown in FIG. 13, a 3D gauge 553 indicating 3D effect information may be displayed on a region of the screen 550, on which the stereoscopic 3D image is displayed, to indicate 3D effect information, 3D effect change, or the like in real time. The 3D gauge 553 may be displayed according to user selection or may be displayed when the 3D effect or 3D effect change of the stereoscopic 3D image that is currently being reproduced is equal to or higher than a preset level.

The 3D effect of the stereoscopic 3D image may be adjusted using the 3D gauge 553. For example, when the 3D effect is excessive causing eye fatigue, the user may reduce the 3D effect level of the stereoscopic 3D image by controlling the 3D gauge 553 through an input operation 555 such as dragging after touching the 3D gauge 553. The 3D gauge 553 may provide a function to adjust the 3D effect of the current screen in this manner while indicating the 3D effect.

The mobile terminal and the method for controlling the operation of the same according to the present invention are not limited in application to the configurations and methods of the embodiments described above and all or some of the embodiments may be selectively combined to implement various modifications.

The method for controlling a mobile terminal according to the present invention can be embodied as processor readable code stored in a processor readable medium provided in the mobile terminal. The processor readable medium includes any type of storage device that stores data which can be read by a processor. Examples of the processor readable medium include Read Only Memory (ROM), Random Access Memory (RAM), CD-ROMs, magnetic tapes, floppy disks, optical data storage devices, and so on. The processor readable medium can also be embodied in the form of carrier waves such as signals transmitted over the Internet. The processor readable medium can also be distributed over a network of coupled processor systems so that the processor readable code is stored and executed in a distributed fashion.

As is apparent from the above description, the present invention has a variety of advantages. 3D viewing sections and 2D viewing sections are determined according to a preset viewing condition(s) so that a stereoscopic 3D image and a 2D image can be alternately displayed in the determined 3D and 2D viewing sections. In addition, when a sharp disparity change has occurred while 3D content is reproduced, the disparity change may be reduced or the 3D content may be displayed as a 2D image. This prevents sharp changes in the disparity or lengthy viewing of stereoscopic 3D images, thereby reducing user fatigue that may be caused when viewing stereoscopic 3D images.

Although the present invention has been illustrated and described above with reference to the specific embodiments, the present invention is not limited to the specific embodiments and it will be apparent to those skilled in the art that various modifications can be made to the embodiments without departing from the scope of the present invention as disclosed in the accompanying claims and such modifications should not be construed as departing from the spirit or scope of the present invention.

## Claims

1. A method for controlling operation of a mobile terminal, the method comprising:
selecting 3D content to be reproduced;
determining a 3D viewing section and a 2D viewing section of the 3D content according to a preset viewing condition; and
displaying the 3D content as a 3D image on a display module in the 3D viewing section and displaying the 3D content as a 2D image on the display module in the 2D viewing section.

2. The method according to claim 1, wherein the viewing condition is set based on at least one of viewing time information, user information, age information, 3D effect information of the 3D content and provider recommendation information of the 3D content.

3. The method according to claim 1, further comprising providing a menu that enables setting of the viewing condition.

4. The method according to claim 1, further comprising displaying, when the 3D content is displayed as a 3D image, 3D effect information of the 3D image on a region of the display module.

5. The method according to claim 1, further comprising switching display of the 3D content from display of a 3D image to display of a 2D image according to a specific user input.

6. The method according to claim 1, further comprising controlling a 3D effect of the 3D image according to a specific user input

7. The method according to claim 1, further comprising,
displaying the 3D content as the 3D image after adjusting change of a 3D effect of the 3D image to be equal to or less than a first reference level when the change of the 3D effect of the 3D image exceeds the first reference level.

8. The method according to claim 7, further comprising displaying the 3D content as a 2D image on the display module when the change of the 3D effect of the 3D image exceeds a second reference level.

9. The method according to claim 7, wherein the first and second reference levels are set based on a user command.

10. The method according to claim 7, wherein the change of the 3D effect is calculated based on at least one of comparison of depth information of each frame of the 3D image, and information included in the 3D content.

11. A mobile terminal comprising:
a display module configured to be able to display a 3D image and a 2D image; and
a controller configured to determine, when 3D content to be reproduced is selected, a 3D viewing section and a 2D viewing section of the 3D content according to a preset viewing condition and to display the 3D content as a 3D image on the display module in the 3D viewing section and displaying the 3D content as a 2D image on the display module in the 2D viewing section.

12. The mobile terminal according to claim 11, wherein the viewing condition is set based on at least one of viewing time information, user information, age information, 3D effect information of the 3D content, and provider recommendation information of the 3D content.

13. The mobile terminal according to claim 11, wherein the viewing condition is set based on at least one of 3D effect information of the 3D content and provider recommendation information of the 3D content.

14. The mobile terminal according to claim 11, wherein the controller sets the viewing condition based on a user command

15. The mobile terminal according to claim 11, wherein, when a touch input has been made through the display module while the 3D content is being displayed as a 3D image, the controller switches display of the 3D content from display of the 3D image to display of a 2D image.
